(19) Europäisches Patentamt / European Patent Office / Office européen des brevets

(11) **EP 2 424 188 B1**

(12) **FASCICULE DE BREVET EUROPEEN**

(45) Date de publication et mention
de la délivrance du brevet:
**01.05.2013 Bulletin 2013/18**

(51) Int Cl.:
***H04L 29/06*** *(2006.01)*

(21) Numéro de dépôt: **11175114.5**

(22) Date de dépôt: **22.07.2011**

(54) **Procédé de diffusion d'un flux de transport audio/video numérique paquétisé, notamment pour diffusion sur ligne xDSL**

Übertragungsverfahren eines zu Paketen zusammengefassten digitalen Audio-/Videodatenflusses, insbesondere zur Übertragung über xDSL-Linie

Method for distributing a packetised audio / video transport stream, particularly for distribution over an xDSL line

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.08.2010 FR 1056872**

(43) Date de publication de la demande:
**29.02.2012 Bulletin 2012/09**

(73) Titulaire: **FREEBOX**
**75008 Paris (FR)**

(72) Inventeur: **Massiot, Christophe**
**75014 PARIS (FR)**

(74) Mandataire: **Dupuis-Latour, Dominique et al**
**Bardehle Pagenberg**
**10, boulevard Haussmann**
**75009 Paris (FR)**

(56) Documents cités:
**EP-A1- 1 873 780**

- **ISO/IEC: "ISO/IEC 13818-1. INFORMATION TECHNOLOGY - GENERIC CODING OF MOVING PICTURES AND ASSOCIATED AUDIO INFORMATION: SYSTEMS. // TECHNOLOGIES DE L'INFORMATION - CODAGE GÉNÉRIQUE DES IMAGES ANIMÉES ET DU SON ASSOCIÉ: SYSTÈMES - Recommendation ITU-T H.222.0 (2000E)", INTERNATIONAL STANDARD ISO/IEC,, vol. 13818-1, 1 décembre 2000 (2000-12-01), pages I-XVII,1, XP002601409,**
- **"ITU-T RECOMMENDATION H.262, INTERNATIONAL STANDARD ISO/IEC 13818.2 MPEG-2 VIDEO. TRANSMISSION OF NON-TELEPHONE SIGNALS. INFORMATION TECHNOLOGY - GENERIC CODING OF MOVING PICTURES AND ASSOCIATED AUDIO INFORMATION: VIDEO", ITU-T TELECOMMUNICATION STANDARIZATION SECTOR OF ITU, GENEVA, CH, 1 juillet 1995 (1995-07-01), pages 1-211, XP000198491,**

**Description**

L'invention concerne la diffusion des flux vidéo numériques.

Elle concerne plus particulièrement la diffusion de flux vidéo par des canaux de transmission n'offrant qu'un débit de données (ou "bande passante") relativement faible, comme dans le cas des transmissions par IP *(Internet Protocol)*, notamment des transmissions effectuées sur une paire téléphonique torsadée courante, préexistante, via un fournisseur d'accès internet par une technologie de type xDSL *(Digital Subscriber Line,* ligne numérique d'abonné), principalement ADSL *(Asymmetric DSL).*

En particulier, la bande passante en xDSL est fortement contrainte par la technique de transmission : elle dépend de l'atténuation sur la paire de cuivre téléphonique, elle-même fonction, entre autres, de la longueur de la paire de fils de cuivre (éloignement entre l'abonné et l'autocommutateur central), du nombre de points de coupure et de la qualité de la liaison, en particulier du diamètre des fils. Pour assurer l'éligibilité à un maximum de clients, il est donc nécessaire d'imposer des contraintes fortes sur la bande passante utilisée par les programmes de télévision.

La bande passante pour une diffusion par xDSL est ainsi limitée à quelques mégabits par seconde (Mbps), au plus une vingtaine de mégabits par seconde.

Pour la diffusion de la télévision, dans une transmission de type xDSL, la bande passante allouée est typiquement une allocation fixe de 3,5 Mbps par chaîne diffusée. Les flux audio et vidéo à diffuser font donc l'objet au préalable d'une compression par un encodeur, au moyen de procédés tels que ceux prescrits en particulier par les normes ISO/IEC 13818-2 et 3 (MPEG-2).

Après compression, les données vidéo, audio et système encodées forment des flux élémentaires continus respectifs ES *(Elementary Stream,* flux élémentaire), chacun correspondant par exemple à une image du flux vidéo ou une trame du flux audio. Les flux ES sont ensuite découpés en paquets de taille variable ou PES *(Packetized Elementary Stream,* flux élémentaire en paquets), qui sont ensuite eux-mêmes découpés en paquets de taille fixe TS *(Transport Stream,* flux de transport).

Ce découpage est défini par la norme internationale ISO/IEC 13818-1 (MPEG-2) éventuellement étendue ou précisée par des normes régionales, notamment la norme européenne DVB ou la norme américaine ATSC. Pour plus de précisions, on pourra se référer aux spécifications détaillées :

 ISO/IEC 13818-1:2007: Information technology — Generic coding of moving pictures and associated audio information: Systems, International Standard ISO/IEC, Vol. 13818-1, et Dec 2000, pages I-XVII, 1, XP002601409 ; et
 ITU-T Recommendation H.262, International Standard ISO/IEC 13818.2 MPEG-2 Video, Transmission of Non-Telephone Signals. Information Technology — Generic Coding of Moving Pictures and associated Audio Information: Video, ITU-T Telecommunication Standardization Sector of ITU, Geneva, CH, 01 July 1995, pages 1-211, XP000198491.

Les paquets TS provenant des différents flux élémentaires sont ensuite multiplexés pour former un train de données binaires final, qui sera émis sur des supports de transmission tels que satellite, câble, diffusion hertzienne terrestre ou réseau IP, notamment diffusion xDSL via une ligne téléphonique fixe préexistante.

Chaque paquet TS est un paquet de 188 octets comprenant un en-tête d'au moins 4 octets, comprenant différents indicateurs qualifiant le contenu du paquet, ainsi qu'un numéro codé sur 13 bits (de 0000 à 8191) appelé PID *(Packet IDentifier,* identifiant de paquet), caractérisant l'appartenance des données du paquet.

Pour restituer correctement le programme (ou "service") de télévision demandé par l'utilisateur, le décodeur doit connaître les PID des différents paquets du programme.

La norme ISO/IEC 13818-1 définit à cet effet deux tables de correspondance, elles-mêmes encapsulées dans des paquets élémentaires TS permettant de transporter le contenu de ces tables :

- la PAT *(Program Association Table,* table d'association de programme), qui est toujours transportée dans des paquets de PID '0000', donne la liste des programmes audiovisuels présents dans le flux de transport, ainsi que les PIDs des paquets transportant les PMTs associés à chacun de ces programmes ;
- la PMT *(Program Map Table,* table de mappage de programme) donne la liste des flux élémentaires vidéo, audio, sous-titres, etc., associés à un programme particulier, ainsi que leur type, différentes propriétés, et le PID des paquets de contenu de chacun de ces flux ; cette table est encapsulée et peut être transportée dans des paquets de PID arbitraire, dont la valeur est donnée par la PAT.

Le décodeur recevant le flux TS procède de la manière suivante :

- tout d'abord, il envoie les commandes nécessaires à la couche physique pour sélectionner le flux de transport (fréquence satellite, fréquence câble, fréquence hertzienne ou adresse multicast sur les réseaux de type IP) ;
- il lit tous les paquets de ce flux jusqu'à trouver un paquet de PID '0000' définissant une PAT ;
- il recherche alors dans la PAT le ou les programme(s) pertinent(s), repère la ou les PID(s) de la PMT ou des PMTs nécessaire(s) ;
- il lit ensuite tous les paquets suivants jusqu'à récupérer la ou les PMT(s) demandée(s) ;

- de cette (ces) PMT(s) il extrait la liste des flux élémentaires (vidéo, audio, sous-titres ; de cryptage ; services interactifs) nécessaires aux services ;
- et ensuite il programme le démultiplexeur pour envoyer les PIDs demandés vers les modules de décodage matériel.

D'autres tables, non définies dans ISO/IEC 13818-1, sont parfois nécessaires pour le bon fonctionnement du décodeur, en particulier des tables encapsulées dans des paquets de type ECM *(Entitlement Control Mes*sage, message de contrôle d'habilitation) qui contiennent les clés de désembrouillage des flux protégés. La norme MPEG définit en particulier que le PID transportant les ECMs doit être indiqué dans la PMT de chaque programme crypté. Les modules de décodage matériel devront donc attendre que ces paquets aient été reçus pour pouvoir décrypter le programme correspondant.

Il ne suffit pas cependant que les modules de décodage reçoivent les bons PIDs en clair pour que l'opération soit terminée.

En effet, comme les données encodées passent par plusieurs étapes d'encapsulation avant d'être découpées en paquets TS, il est nécessaire de repérer les débuts des structures PES, puis des différentes métastructures propres à chaque type de données : début de trame audio, début d'image, etc., correspondant à chacun des paquets PES qui avaient été eux-mêmes fractionnés en paquets TS.

Cette opération se fait généralement en repérant une séquence de démarrage sur plusieurs octets qui caractérise le début d'un élément syntaxique et permet d'une part, l'accès au début d'une image codée (ainsi, les quatre octets '0x0 0x0 Ox1 0x0' selon ISO/IEC 13818-2, mpeg-2).

Dans le cas de la vidéo, cette étape n'est pas encore suffisante.

En effet, les algorithmes de compression conduisent à la production de plusieurs types d'images, dénommés I, P ou B :

- une image I (*Intra*) correspond à une image complète comprimée et codée ;
- une image de type P *(Prédictif)* est codée en prédisant le plus grand nombre possible de zones de l'image (macroblocs) par des références à des zones similaires d'images I ou P de référence associées à des vecteurs de mouvements ;
- les images de type B *(Bidirectionnel)* augmentent encore l'efficacité de compression en comparant l'image à coder aux images précédentes et suivantes.

Les seules images qu'il soit possible d'obtenir intégralement dans un paquet PES donné sont donc les images I, qui ne nécessitent aucun contexte pour être lues.

L'instant correspondant du flux, où l'on recevra le premier paquet d'une image I, est appelé "point d'accès aléatoire".

En conclusion, après une opération de changement de chaîne, le décodeur ne pourra restituer le nouveau programme qu'après avoir effectué les opérations successives suivantes :

- sélection matérielle ou logicielle de la couche physique correspondant aux nouvelles caractéristiques de la porteuse véhiculant le programme sélectionné ;
- attente de la PAT et sélection du programme ;
- attente de la PMT et sélection des flux élémentaires associés ;
- s'il s'agit d'un flux protégé, attente de l'ECM et programmation de la couche de décryptage ;
- pour chaque flux élémentaire, attente des structures syntaxiques de haut niveau (PES, début d'image ou de trame, etc.) ;
- pour la vidéo, attente de la prochaine image I.

On comprendra qu'avec un tel algorithme, le temps de resynchronisation du décodeur après un changement de programme peut devenir très long. Pour éviter cela, les normes de diffusion classique (ISO, DVB et règlements nationaux) ont imposé un certain nombre de contraintes, notamment :

- que toutes les tables (PAT, PMT, ECM) soient régulièrement répétées (typiquement toutes les 20 à 200 ms) ;
- qu'une image entièrement codée (image I) soit insérée à intervalles réguliers (typiquement toutes les secondes, voire toutes les deux secondes) - nonobstant bien entendu l'insertion d'une nouvelle image I à chaque changement de plan.

Ces mesures autorisent un accès aléatoire au flux de transport ou "zapping" dans un temps raisonnable, mais elles nuisent à l'efficacité de la compression, car elles obligent à ajouter périodiquement des informations redondantes.

Cette approche est pertinente dans le cas de systèmes de diffusion classiques par satellite, câble ou diffusion hertzienne terrestre, du fait de la bande passante globale importante, généralement de l'ordre de 30 à 40 Mbps, qui rend négligeable l'ajout de tables redondantes.

De plus, le fait de diffuser plusieurs programmes sur une même fréquence permet en général de faire en sorte que les images I de chaque programme ne surviennent pas en même temps. Comme, statistiquement, il est assez peu probable que tous les programmes d'un même multiplex présentent à un instant donné une forte complexité nécessitant beaucoup de bande passante, le multiplexeur peut allouer davantage de bande passante aux chaînes qui en ont le plus besoin à un moment donné, selon un algorithme de priorité de type dit "multiplexage statistique".

Dans le cas d'une transmission xDSL, le problème est tout à fait différent car dans la mesure où la paire de fils de cuivre n'est généralement capable de transmettre qu'un seul programme de télévision indépendamment, le débit alloué à la transmission d'une chaîne est un débit constant et relativement faible — typiquement, une allocation de 3,5 Mbps par chaîne. L'économie de bande passante est donc un facteur particulièrement critique. En outre, du fait de l'absence de multiplexage (puisque le programme est unique), il n'y a pas à attendre d'effet de répartition statistique.

Le but de l'invention est de pallier ces inconvénients, et de proposer une solution permettant d'échapper au dilemme entre la réduction du temps de resynchronisation après changement de programme (rapidité du "zapping"), et les contraintes de bande passante qui conditionnent aujourd'hui la diffusion sur des canaux à faible débit tels que les canaux de diffusion xDSL.

Plus précisément, l'invention a pour objet un procédé comprenant les étapes connues, exposées par exemple par la norme ISO/IEC 13818-1, indiquées dans le préambule de la revendication 1. Les étapes propres à l'invention sont énoncées dans la partie caractérisante de cette revendication 1, et les sous-revendications visent diverses caractéristiques subsidiaires avantageuses.

On va maintenant décrire un exemple de mise en oeuvre de l'invention, en référence aux dessins annexés où les mêmes références numériques désignent d'une figure à l'autre des éléments identiques ou fonctionnellement semblables.

La Figure 1 illustre de façon schématique les différentes étapes de création des flux et leur multiplexage par le dispositif de codage.

La Figure 2 montre plus précisément comment se décompose la structure de chacun des flux et des paquets.

La Figure 3 montre la relation entre les diverses tables, encapsulées dans des paquets, destinées à permettre le décodage du programme.

La Figure 4 illustre la manière de calculer, de la manière caractéristique de l'invention, l'instant optimal d'envoi de la table PAT après avoir déterminé l'instant de survenue du prochain point d'accès aléatoire.

La Figure 5 illustre une variante de la Figure 4, correspondant à une situation où la taille de la table PMT ne lui permet pas d'être encapsulée dans un seul paquet.

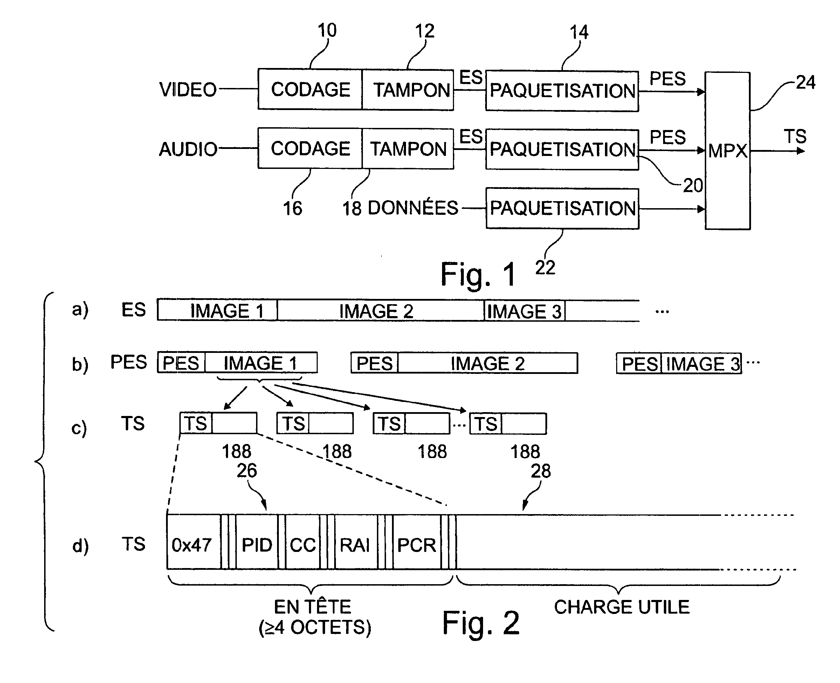

Sur la Figure 1, on a illustré schématiquement la manière dont sont codés, paquétisés et multiplexés les divers flux vidéo, audio et de données par le circuit de codage.

Le flux vidéo fait l'objet d'un premier codage (compression, définition d'image I, P ou B, etc.). Ce codage met en particulier en oeuvre une mémoire tampon 12 permettant de réaliser une analyse antérieure des images à venir (typiquement sur 5 à 40 images) selon une technique d'anticipation dite de *"look-ahead"* consistant à "regarder devant soi". Cette mémoire tampon existe dans la plupart des dispositifs actuels, et elle est utilisée notamment à deux fins :

- par le vérificateur de mémoire vidéo (VBV) du modèle de conformité T-STD défini par ISO/IEC 13818-1, qui impose d'avancer (d'une manière non négligeable, parfois de l'ordre d'une seconde) l'émission de certaines images par rapport à leur date idéale de décodage ;
- par les multiplexeurs statistiques, qui essaient de répartir les pics de bande passante entre chaque flux élémentaire et déplacent donc volontairement certains paquets dans le temps, dans les limites autorisées par le modèle T-STD.

Cette mémoire tampon sera également utilisée pour mettre en oeuvre l'invention, par la connaissance *a priori* de la prochaine image de référence avec compression et codage complet de l'image (codage I), correspondant au prochain "point d'accès aléatoire".

Le flux résultant ES en sortie de la mémoire tampon 12 est ensuite découpé en paquets de taille variable (bloc 14), chaque paquet correspondant typiquement à une image du flux vidéo.

Un traitement semblable est appliqué au flux audio, les blocs 16, 18 et 20 étant homologues des blocs 10, 12 et 14 concernant le flux vidéo. Enfin, des données font également l'objet d'un découpage en paquets, par le bloc 22.

Les paquets ainsi obtenus en sortie des blocs 14, 20 et 22 sont multiplexés ensemble (bloc 24), cette opération ayant pour objet de créer un flux de transport constitué d'une succession de paquets TS ayant tous la même dimension (188 octets), ce qui impose donc un découpage supplémentaire, des paquets PES en sous-paquets TS.

La structure des divers paquets est illustrée Figure 2, où l'on a représenté :

- sur la ligne (a) la structure du flux ES vidéo (flux continu constitué d'une succession d'images codées) ;
- sur la ligne (b) la structure des paquets PES de taille variable ;
- sur la ligne (c) les différents paquets TS issus du découpage d'un paquet PES donné ; et
- sur la ligne (d), plus précisément la structure d'un paquet TS, qui comprend un en-tête 26 de quatre octets (au moins) et une charge utile 28 constituée par le reste des 188 octets.

L'en-tête 26 comprend tout d'abord un octet de synchronisation '0x47', ainsi qu'un identifiant de paquet PID, qui est un numéro codé sur 13 bits (de 0000 à 8191). L'en-tête comporte également divers indicateurs tels que :

- compteur de continuité CC (de 00 à 15), permettant de s'assurer que le chaînage des paquets TS successifs d'une même image est correct ;
- indicateur RAI *(Random Access Indicator,* indicateur d'accès aléatoire) signalant que le paquet TS correspond au début d'une image de type 1 (point d'accès aléatoire) ;
- indicateur PCR *(Program Clock Reference,* référence d'horloge de programme), servant à l'horodatage du paquet TS ;
- indication de ce que le flux est crypté, etc.

La charge utile 28 est constituée soit de données de contenu proprement dit (flux vidéo, audio, etc.), soit de tables, encapsulées sous la forme d'un paquet TS, qui seront nécessaires au décodeur pour reconstituer les différents flux vidéo/audio/données à partir de la séquence des paquets TS transmis dans le flux.

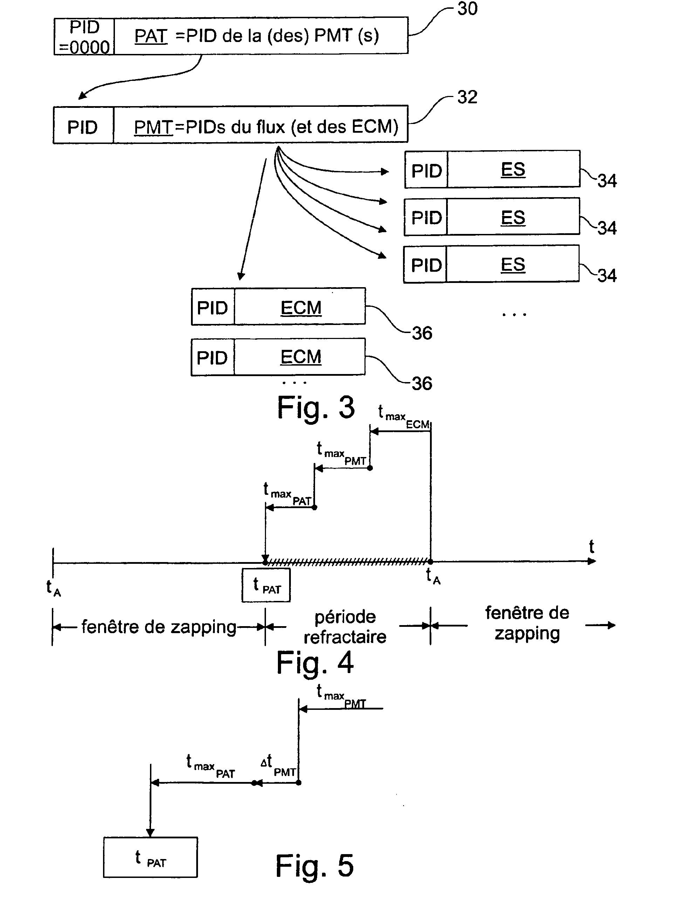

La Figure 3 illustre la hiérarchie de ces différentes tables, toutes encapsulées dans des paquets de type TS 30, 32, 34 ou 36.

La table PAT est toujours transportée dans un paquet 30 dont la valeur de PID est '0000'. Elle donne la liste des programmes présents dans le flux de transport (dans le cas d'une transmission sur xDSL, il n'y aura en fait qu'un seul programme), ainsi que le ou les PID(s) du ou des paquet(s) 32 transportant les PMTs associées à chaque programme.

La PMT, généralement encapsulée dans un seul paquet 32, donne la liste des flux élémentaires associés à un programme particulier, ainsi que leur type, différentes propriétés, et les PIDs des paquets 34 de contenu transportant chaque flux ES. Le PID du paquet 32 encapsulant la PMT peut être arbitraire, et sa valeur est connue d'après le contenu de la PAT encapsulée dans le paquet 30.

Si l'émission d'une table PAT ou PMT nécessite plus de 184 octets, donc plus d'un paquet TS, la table est découpée en plusieurs paquets TS, ce qui est toutefois rarissime pour les flux de transport ne comportant qu'un seul programme.

Dans le cas d'un flux crypté, la PMT encapsulée dans le paquet 32 pointe également vers des paquets TS 36 de type ECM, qui contiennent les clefs de décryptage des flux protégés.

Dans une configuration conventionnelle, les tables PAT, PMT et éventuellement ECM sont réémises à intervalles réguliers, indépendamment de la transmission des flux de contenu, par exemple toutes les 20 à 100 ms. Il est également prévu de réémettre une image I à intervalles réguliers, par exemple toutes les secondes, voire toutes les 2 secondes (et, bien sûr, au moins à chaque changement de plan).

Comme on l'a indiqué plus haut, ces mesures nuisent à l'efficacité de la compression, car elles obligent à ajouter des informations redondantes de façon périodique.

Le point de départ de l'invention réside dans la constatation que, lorsque le flux de transport n'a qu'un seul programme à transmettre, et donc ne comprend qu'un seul flux élémentaire vidéo, il est aisé de calculer la position du prochain point d'accès aléatoire qui sera utilisable par le décodeur. Ce point d'accès aléatoire est connu à l'avance par la technique d'anticipation *look ahead* décrite plus haut, grâce aux images contenues dans le tampon 12.

L'idée de base de l'invention consiste, une fois connue la position temporelle de ce point d'accès aléatoire, à caler temporellement l'émission de la PAT et des tables qui la suivent (PMT et, éventuellement ECM) sur cette position temporelle.

Cette manière de procéder est notamment permise par le fait que les temps maximaux de prise en compte des tables par les décodeurs utilisés peuvent être connus *a priori,* par l'administrateur du service peut connaître.

Ceci présuppose que le réseau xDSL est un réseau fermé d'opérateur, et que les types de terminaux mis à la disposition du public sont connus.

Ces durées seront désignées par la suite $t_{maxPAT}$, $t_{maxPMT}$ et $t_{maxECM}$. Leur valeur typique est pour chacune de l'ordre de 150 ms, valeur correspondant en pratique, pour l'essentiel, au temps de prise en compte de l'interruption générée par les circuits matériels *(hardware)* par le processeur assurant le traitement logiciel des données.

Ainsi, si un décodeur a besoin par exemple de 150 ms pour analyser et prendre en compte une PAT, il ne sert à rien d'envoyer une PMT pendant ce laps de temps, car la PMT envoyée sera perdue et il sera nécessaire d'attendre la suivante.

La manière de procéder pour obtenir la synchronisation selon l'invention est illustré Figure 4.

À partir du contenu de la mémoire tampon vidéo 12, le multiplexeur calcule la date du prochain point d'accès aléatoire $t_A$, c'est-à-dire la date d'envoi du premier paquet TS de la prochaine image I (cette image étant, comme indiqué plus haut, envoyée en tout état de cause au moins toutes les secondes).

Le multiplexeur calcule ensuite, à rebours, les dates minimales $t_{ECM}$, $t_{PMT}$, et $t_{PAT}$ d'envoi des différentes tables respectives pour que chacune puisse être prise en compte par le processeur chargé du décodage :

$$t_{ECM} = t_A - t_{maxECM} ,$$

$$t_{PMT} = t_{ECM} - t_{maxPMT} , \text{ et}$$

$$t_{PAT} = t_{PMT} - t_{maxPAT}.$$

Connaissant l'instant $t_A$ (d'après l'horodatage du paquet TS correspondant), on peut ainsi définir une date $t_{PAT}$ à laquelle, au plus tard, devra être envoyée la PAT si l'on veut que les tables PMT et ECM qui lui feront suite puissent être prises en compte.

Postérieurement à cette date, la prise en compte ne sera pas possible, et l'on appellera "période réfractaire" cette période au cours de laquelle il est inutile d'envoyer des tables.

A partir de l'instant $t_A$ et jusqu'à l'instant $t_{PAT}$ au plus tard, on dispose ainsi d'une "fenêtre de zapping" au cours de laquelle on est certain que toutes les tables pourront être successivement prises en compte.

L'instant d'envoi de la table PAT est choisi au plus près de (mais antérieurement à) l'instant $t_{PAT}$, en évitant de faire trop précéder l'envoi par rapport à l'instant $t_{PAT}$, car sinon on diminuera la taille de la fenêtre de zapping efficace, avec une dégradation, au final, du temps moyen de zapping. En d'autres termes, l'instant $t_{PAT}$ est le dernier moment possible pour commencer à envoyer les tables (toute table envoyée postérieurement n'aura pas le temps d'être prise en compte sur certains décodeurs avant la prochaine table, ou avant le point d'accès aléatoire $t_A$).

On notera que la fréquence d'envoi des PATs est la même que celle des points d'accès aléatoire : si l'on envoie une image I toutes les secondes, une seule PAT sera envoyée par seconde.

Cette technique permet en premier lieu d'optimiser le temps moyen de zapping.

Elle permet d'autre part de réduire de façon substantielle les besoins en bande passante : en effet, toute table qui serait insérée en dehors des périodes indiquées serait sans effet, du fait de l'absence de point d'accès aléatoire dans le flux vidéo, mais serait redondante et viendrait donc pénaliser le débit d'informations. On peut donc faire l'économie du codage de ces tables, avec un gain corrélatif en ce qui concerne la bande passante.

En particulier, les tables PAT et PMT ne peuvent n'être envoyées que toutes les 300 à 500 ms, au lieu de l'être toutes les 20 à 200 ms comme dans les techniques habituellement mises en oeuvre.

Divers perfectionnements peuvent être portés à l'invention, notamment en introduisant :

- un intervalle minimal $t_{min}$ entre l'émission de deux tables du même type : en effet, dans certains cas (série d'éclairs, par exemple), l'encodeur peut être amené à introduire beaucoup d'images I sur une période donnée, ce qui augmenterait la bande passante allouée à l'émission des tables PAT, PMT, ... L'intervalle minimal $t_{min}$, par exemple de 200 ms, permettra de borner le débit utilisé pour chaque table, sans pour autant nuire à l'accès aléatoire car les tables restent répétées régulièrement ;
- un intervalle maximal $t_{max}$ entre l'émission de deux tables du même type : cela aura certes pour effet d'introduire des tables redondantes supplémentaires qui seront sans effet sur le temps d'accès, et donc d'augmenter le débit alloué à l'émission des tables, mais certains standards, notamment DVB, imposent un intervalle maximal (500 ms selon DVB) pour la répétition des tables, intervalle qu'il convient de respecter pour obtenir la conformité à la norme.

Il peut également arriver que l'émission d'une table nécessite plus de 184 octets, donc plus d'un paquet TS ; dans ce cas, la table est découpée en plusieurs paquets TS, qui peuvent être séparés temporellement de plusieurs millisecondes pour respecter notamment les contraintes du modèle T-STD. Si cela doit arriver, il faut différencier dans le calcul de la période réfractaire expliquée ci-dessus (i) le temps optimal d'envoi du dernier paquet de la table (du côté gauche des trois équations données plus haut), et (ii) le temps optimal d'envoi du premier paquet de la table (côté droit des équations données plus haut). Ceci revient à introduire, comme illustré Figure 5, une constante supplémentaire $\Delta t_{PMT}$ (par exemple), typiquement de l'ordre de 20 ms, correspondant au temps de prise en compte d'un deuxième paquet contenant la fin de la table PMT.

## Revendications

1. Un procédé de diffusion d'un flux vidéo numérique multiplexé de type Flux de Transport TS, dans lequel :

- des données d'image d'un flux élémentaire ES sont scindées en paquets et transmises sous forme d'un flux élémentaire paquétisé TS, chaque paquet étant identifié par un identifiant de paquet PID propre ;
- la diffusion comporte, à des instants prédéfinis, des points d'accès aléatoire correspondant au début de diffusion d'une image complète de type Intra ; et
- le procédé comporte également l'émission d'une pluralité de tables, encapsulées dans des paquets TS (30, 32, 36) respectifs, ces tables permettant de déterminer les PIDs des paquets (34) contenant lesdites données d'image,
et l'accès à toutes les tables de cette pluralité et leur traitement étant nécessaire pour permettre, côté réception du flux vidéo numérique multiplexé, la reconstitution, et éventuellement le décryptage, de chaque image du flux élémentaire à partir des paquets successifs diffusés, procédé **caractérisé par** les étapes préalables de :

- détermination du temps maximal ($t_{maxpAT}$, $t_{maxPMT}$, $t_{maxECM}$) de prise en compte et de traitement, côté réception du flux vidéo numérique multiplexé, de chacune des tables de ladite pluralité de tables ; et

- calcul d'une durée ($t_{maxPAT}$+ $t_{maxPMT}$+ $t_{maxECM}$) de période réfractaire correspondante, cumulée pour l'ensemble des tables,

et, en continu lors de la diffusion :

- détermination de l'instant ($t_A$) du prochain point d'accès aléatoire ; et

- émission du paquet encapsulant la première desdites tables au plus tard à l'instant ($t_{PAT}$) du prochain point d'accès aléatoire ($t_A$), anticipé de la durée ($t_{maxPAT}$+ $t_{maxPMT}$+ $t_{maxECM}$) de ladite période réfractaire.

2. Le procédé de la revendication 1, dans lequel ladite pluralité de tables comprend une table PAT d'association de programme, suivie d'une table PMT de mappage de programme.

3. Le procédé de la revendication 1, dans lequel ladite pluralité de tables comprend en outre une table ECM de message de contrôle d'habilitation, pour le décryptage des images du flux élémentaire.

4. Le procédé de la revendication 1, dans lequel il est en outre prévu un intervalle minimal entre deux émissions successives de tables du même type de ladite pluralité de tables.

5. Le procédé de la revendication 1, dans lequel il est en outre prévu un intervalle maximal entre deux émissions successives de tables du même type de ladite pluralité de tables.

6. Le procédé de la revendication 1, dans lequel une table d'un type donné est encapsulée sur un seul paquet, et ledit temps maximal de prise en compte et de traitement de cette table correspond au temps de prise en compte et de traitement d'un paquet.

7. Le procédé de la revendication 1, dans lequel une table d'un type donné est encapsulée sur plusieurs paquets, et ledit temps maximal de prise en compte et de traitement de cette table correspond au temps de prise en compte et de traitement d'un paquet, augmenté du temps de prise en compte d'un(des) paquet(s) supplémentaire(s).

8. Le procédé de la revendication 1, dans lequel une table d'un type donné n'est émise qu'une seule fois entre deux points d'accès aléatoire successifs.

9. Le procédé de la revendication 1, dans lequel ladite diffusion du flux vidéo numérique multiplexé est une diffusion par réseau en programme unique.

10. Le procédé de la revendication 9, dans lequel ladite diffusion par réseau est une diffusion sur ligne xDSL.

## Claims

1. A method for broadcasting a multiplexed digital video stream of the Transport Stream type TS, wherein:

    - image data from an elementary stream ES are divided into packets and transmitted as a packetized elementary stream TS, each packet being identified by a proper packet identifier PID;
    - the broadcast comprises, at predefined instants, random access points corresponding to the beginning of broadcast of a complete image of the Intra type; and
    - the method also comprises the transmission of a plurality of tables, encapsulated in respective TS packets (30, 32, 36), these tables allowing determining the PIDs of the packets (34) containing said image data, and the access to all the tables of this plurality and the processing thereof being necessary for allowing, on the multiplexed digital video stream reception side, the reconstitution, and possibly the decryption, of each image of the elementary stream from the successive packets broadcasted,

    the method being **characterized by** the preliminary steps of:

    - determining the maximum taking into account and processing time ($t_{maxPAT}$, $t_{maxPMT}$, $t_{maxECM}$), on the multiplexed digital video stream reception side, for each of the tables of said plurality of tables; and
    - computing a duration ($t_{maxPAT}$ + $t_{maxPMT}$ + $t_{maxECM}$) of a corresponding refractory period, cumulated for the whole tables, and, continuously during the broadcast,
    - determining the instant ($t_A$) of the next random access point; and
    - transmitting the packet encapsulating the first of said tables at the latest at the instant ($T_{PAT}$) of the next random access point ($t_A$), advanced by the duration ($t_{maxPAT}$ + $t_{maxPMT}$ + $t_{maxECM}$) of said refractory period.

2. The method of claim 1, wherein said plurality of tables comprises a Program Association Table PAT, followed by a Program Mapping Table PMT.

3. The method of claim 1, wherein said plurality of tables further comprises an Entitlement Control Message table ECM, for the decryption of the elementary stream images.

4. The method of claim 1, wherein it is further provided a minimum interval between two successive transmissions of tables of the same type from said plurality of tables.

5. The method of claim 1, wherein it is further provided a maximum interval between two successive transmissions of tables of the same type from said plurality of tables.

6. The method of claim 1, wherein a table of a given type is encapsulated over only one packet, and said maximum taking into account and processing time for this table corresponds to the taking into account and processing time for a packet.

7. The method of claim 1, wherein a table of a given type is encapsulated over several packets, and said maximum taking into account and processing time for this table corresponds to the taking into account and processing time for a packet, increased by the taking into account time for one (several) additional packet(s).

8. The method of claim 1, wherein a table of a given type is transmitted only once between two successive random access points.

9. The method of claim 1, wherein said broadcast of the multiplexed digital video stream is a single program network broadcast.

10. The method of claim 9, wherein said network broadcast is a broadcast over xDSL line.

**Patentansprüche**

1. Verfahren zur Verbreitung eines multiplexierten digitalen Videostroms von der Art Transportstrom TS, bei dem:

   - Bilddaten eines Elementarstroms ES in Pakete unterteilt und in Form eines paketisierten Elementarstroms TS übertragen werden, wobei jedes Paket durch eine eigene Paketkennung PID identifiziert wird;
   - die Verbreitung an vordefinierten Zeitpunkten Direktzugriffspunkte aufweist, die dem Verbreitungsbeginn eines vollständigen Bilds vom Typ Intra entsprechen; und
   - das Verfahren ebenfalls das Senden einer Vielzahl von Tabellen aufweist, die in Pakete TS (30, 32, 36) eingekapselt sind,

wobei diese Tabellen es ermöglichen, die PIDs der die Bilddaten enthaltenden Pakete (34) zu ermitteln,
und der Zugriff auf alle Tabellen dieser Vielzahl und ihre Verarbeitung notwendig sind, um auf der Empfangsseite des multiplexierten digitalen Videostroms die Wiederherstellung und ggf. die Entschlüsselung jedes Bilds des Elementarstroms ausgehend von den verbreiteten aufeinanderfolgenden Paketen zu erlauben,
wobei das Verfahren durch die vorhergehenden Schritte gekennzeichnet ist:
- Bestimmung der maximalen Berücksichtigungs- und Verarbeitungszeit ($t_{maxPAT}$, $t_{maxPMT}$, $t_{maxECM}$) auf der Empfangsseite des multiplexierten digitalen Videostroms jeder der Tabellen der Vielzahl von Tabellen; und
- Berechnung einer Dauer ($t_{maxPAT}$+ $t_{maxPMT}$+ $t_{maxECM}$) einer entsprechenden refraktäre Periode, die für die Gesamtheit der Tabellen kumuliert wird, und durchgehend während der Verbreitung:
- Ermittlung des Zeitpunkts ($t_A$) des nächstens Direktzugriffspunkts; und
- Senden des die erste der Tabellen einkapselnden Pakets spätestens zum Zeitpunkt ($t_{pAT}$) des nächsten Direktzugriffspunkts ($t_A$), antizipiert aus der Dauer ($t_{maxPAT}$+ $t_{maxPMT}$+ $t_{maxECM}$) der refraktären Periode.

2. Verfahren nach Anspruch 1, wobei die Vielzahl von Tabellen eine Programmzuordnungstabelle PAT gefolgt von einer Programm-Mapping-Tabelle PMT enthält.

3. Verfahren nach Anspruch 1, wobei die Vielzahl von Tabellen außerdem eine ECM-Berechtigungskontrollmitteilung für die Entschlüsselung der Bilder des Elementarstroms enthält.

4. Verfahren nach Anspruch 1, wobei außerdem ein minimales Zeitintervall zwischen zwei aufeinanderfolgenden Sendungen von Tabellen des gleichen Typs der Vielzahl von Tabellen vorgesehen ist.

5. Verfahren nach Anspruch 1, wobei außerdem ein maximales Zeitintervall zwischen zwei aufeinanderfolgenden Sendungen von Tabellen des gleichen Typs der Vielzahl von Tabellen vorgesehen ist.

6. Verfahren nach Anspruch 1, wobei eine Tabelle gegebenen Typs in ein einziges Paket eingekapselt ist, und die maximale Berücksichtigungs- und Verarbeitungszeit der Berücksichtigungs- und Verarbeitungszeit eines Pakets entspricht.

7. Verfahren nach Anspruch 1, wobei eine Tabelle gegebenen Typs in mehrere Pakete eingekapselt ist, und die maximale Berücksichtigungs- und Verarbeitungszeit dieser Tabelle der Berücksichtigungs- und Verarbeitungszeit eines Pakets erhöht um die Berücksichtigungzeit eines zusätzlichen Pakets (von zusätzlichen Paketen) entspricht.

8. Verfahren nach Anspruch 1, wobei eine Tabelle gegebenen Typs nur einmal zwischen zwei aufeinanderfolgenden Direktzugriffspunkten gesendet wird.

9. Verfahren nach Anspruch 1, wobei die Verbreitung des multiplexierten digitalen Videostroms eine Netzverbreitung in einem einzigen Programm ist.

10. Verfahren nach Anspruch 9, wobei die Netzverbreitung eine Verbreitung auf einer xDSL-Leitung ist.

EP 2 424 188 B1

**Fig. 1**

**Fig. 2**

| PID =0000 | PAT =PID de la (des) PMT (s) |
|---|---|

30

| PID | PMT=PIDs du flux (et des ECM) |
|---|---|

32

| PID | ES |
|---|---|

34

| PID | ES |
|---|---|

34

| PID | ES |
|---|---|

34

. . .

| PID | ECM |
|---|---|

36

| PID | ECM |
|---|---|

. . .

36

## Fig. 3

$t_{max_{ECM}}$

$t_{max_{PMT}}$

$t_{max_{PAT}}$

$t_{PAT}$

$t_A$

$t_A$

←— fenêtre de zapping —→

période refractaire

fenêtre de zapping →

## Fig. 4

$t_{max_{PMT}}$

$t_{max_{PAT}}$  $\Delta t_{PMT}$

$t_{PAT}$

## Fig. 5

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- ISO/IEC 13818-1:2007. *Information technology — Generic coding of moving pictures and associated audio information: Systems, International Standard ISO/IEC,* Décembre 2000, vol. 13818-1, I-XVII1

- ITU-T Recommendation H.262, International Standard ISO/IEC 13818.2 MPEG-2 Video, Transmission of Non-Telephone Signals. *Information Technology —Generic Coding of Moving Pictures and associated Audio Information: Video, ITU-T Telecommunication Standardization Sector of ITU,* 01 Juillet 1995, 1-211